# EUROPÄISCHE PATENTSCHRIFT

(11) **EP 3 870 875 B1**
(45) Veröffentlichungstag und Bekanntmachung des Hinweises auf die Patenterteilung: **08.05.2024**
(21) Anmeldenummer: 19794126.3
(22) Anmeldetag: 21.10.2019
(51) Int. Cl.: F16F 15/173

(54) **VISKOSITÄTS-DREHSCHWINGUNGSDÄMPFER UND VERFAHREN ZUM HERSTELLEN EINES VISKOSITÄTS-DREHSCHWINGUNGSDÄMPFERS**
VISCOUS TORSIONAL VIBRATION DAMPER AND METHOD OF MANUFACTURING A VISCOUS TORSIONAL VIBRATION DAMPER
AMORTISSEUR DE VIBRATIONS TORSIONNELLES A VISCOSITÉ ET PROCEDE DE FABRICATION D'UN AMORTISSEUR DE VIBRATIONS TORSIONNELLES A VISCOSITÉ

(30) Priorität: 24.10.2018 DE 102018126471
(43) Veröffentlichungstag der Anmeldung: 01.09.2021
(73) Patentinhaber: Hasse & Wrede GmbH, 12681 Berlin (DE)
(72) Erfinder: REINSPERGER, Nobert, 15366 Hoppegarten (DE); STEIDL, Michael, 10318 Berlin (DE)
(74) Vertreter: Specht, Peter
(86) Internationale Anmeldenummer: PCT/EP2019/078602
(87) Internationale Veröffentlichungsnummer: WO 2020/083846

(56) Entgegenhaltungen:
- EP-A1- 0 620 380
- EP-B1- 0 620 380
- WO-A1-96/41974
- DE-A1- 1 775 390

## Beschreibung

Die vorliegende Erfindung betrifft einen Viskositäts-Drehschwingungsdämpfer nach dem Oberbegriff des Anspruchs 1 und ein Verfahren zu dessen Herstellung nach dem Oberbegriff des Anspruchs 10.

Drehschwingungsdämpfer der gattungsgemäßen Art dienen an einer Maschinenwelle - häufig einer Motorkurbelwelle - zur Dämpfung von Drehschwingungen. An der Maschinenwelle wird das Dämpfergehäuse des Drehschwingungsdämpfers drehsteif mit einer Maschinenwelle - häufig einer Motorkurbelwelle - verbunden, deren Drehschwingungen gedämpft werden sollen. Das Dämpfergehäuse und der Schwungring folgen der mittleren Drehgeschwindigkeit der Maschinenwelle ohne Schlupf. Ihre Drehschwingungen hingegen, die sich der gleichmäßigen Drehung überlagern, übertragen sich zunächst nur auf das Dämpfergehäuse. Der Schwungring würde gleichförmig rotieren, wenn ihn nicht ein viskoses Fluid - beispielsweise ein Silikonöl - das den engen Scherspalt ausfüllt, an das Dämpfergehäuse ankoppeln würde. Diese Koppelung ist elastisch und dämpfungsbehaftet. Infolgedessen treten zwischen Dämpfergehäuse und Schwungring Relativ-Drehwinkel von z. B. bis zu ±1 Winkelgrad im Takte der erregenden Wellenschwingung auf. Da sich der Schwungring also in der Dämpfergehäusekammer relativ zum Dämpfergehäuse etwas drehen kann, benötigt er zu seiner Lagerung in der Regel wenigstens eine Lagereinrichtung, die eines oder mehrere Lagerelemente aufweist.

Die DE 69 308 205 T2 und die CN 203 453 380 U offenbaren jeweils einen Viskositäts-Drehschwingungsdämpfer umfassend einen ringplattenförmigen Deckel. Dieser Deckel ist mit einer Überlappnaht und/oder mit einer Stumpfnaht, weit entfernt von der Überlappnaht, verschweißt. Gegenseitige Wechselwirkungen beider Nähte zur Erhöhung der Festigkeit sind bei dieser Anordnung allerdings marginal.

Die US 5 058 453 A offenbart eine Variante wobei der Deckel eines Viskositätsschwingungsdämpfers einseitig, hier am radial inneren Randbereich der Arbeitskammer, mit einer durchgeschweißten Überlappnaht verbunden ist und wobei der Deckel auf der anderen Seite der Arbeitskammer, also im radial äußeren Bereich der Arbeitskammer mit einer Stumpfnaht verschweißt ist.

Typischerweise ist der vorgenannte Schwungring in einer mit Dämpfungsmedium befüllten Arbeitskammer des Dämpfergehäuses gelagert, welcher mit einem Deckel verschlossen sein kann. Der Deckel ist typischerweise mediumsdicht verschweißt so dass das Dämpfungsmedium nicht austreten kann. Allerdings wird der Deckel aufgrund von axialen Schwingungen der Welle durch den Schwungring mit Querschwingungen belastet, welche sich letztendlich auf die Schweißnaht auswirken. Bei einer elastischen oder plastischen Verformung des Deckels kann es somit zur Belastung der Schweißnaht, insbesondere zu Biegespannungen, und je nach Auslegung der Maschinenwelle und der dazugehörigen Maschine bei hohen Kräften sogar zum Versagen der Schweißnaht kommen.

Ausgehend von der vorgenannten Vorbetrachtung ist es die Aufgabe der vorliegenden Erfindung eine kostengünstig-herstellbare und belastbarere Verbindung zwischen dem Deckel und dem Dämpfergehäuse eines Viskositäts-Drehschwingungsdämpfers herzustellen.

Die vorliegende Erfindung löst diese Aufgabe durch einen Viskositäts-Drehschwingungsdämpfer mit den Merkmalen des Anspruchs 1 und durch ein Verfahren zur Herstellung eines Viskositäts-Drehschwingungsdämpfers mit den Merkmalen des Anspruchs 10.

Ein erfindungsgemäßer Viskositäts-Drehschwingungsdämpfer umfasst ein Dämpfergehäuse mit einer Rotationsachse. Dieses Dämpfergehäuse weist eine ringförmige mit einem Dämpfungsmedium befüllten Arbeitskammer auf.

Innerhalb der Arbeitskammer ist ein Schwungring angeordnet. Ein Deckel dient zum mediumsdichten Verschluss der Arbeitskammer.

Der erfindungsgemäße Viskositäts-Schwingungsdämpfer zeichnet sich dadurch aus, dass der Deckel einseitig umlaufend durch eine Abfolge aus einer Stumpfnaht und einer Überlappnaht mit dem Dämpfergehäuse verbunden ist.

Der Deckel ist vorzugsweise als Ringplatte ausgebildet. Er weist einen äußeren Randbereich und einen inneren Randbereich auf. Der Deckel kann einteilig oder mehrteilig aufgebaut sein. An einem ersten der beiden Randbereiche kann der Deckel verklemmt oder verschweißt mit dem Dämpfergehäuse sein und auf dem Dämpfergehäuse aufliegen. An einem zweiten der beiden Randbereiche kann die Abfolge aus Stumpfnaht und Überlappnaht angeordnet sein. Vorteilhaft kann der Deckel allerdings auch in beiden Randbereichen mit Doppelnaht oder Überlappnaht verschweißt sein. Eine Überlappnaht bietet sich insbesondere dann an, wenn der Deckel bündig oder aufgesetzt auf dem Dämpfergehäuse aufliegt und somit eine Deckelaufnahme vorgesehen ist. Bevorzugt sind beide Nahten umlaufend ausgebildet und konzentrisch zueinander angeordnet. Es ist allerdings auch möglich, dass lediglich eine der beiden Nahten umlaufend ist und eine Dichtfunktion zum Verschluss der Arbeitskammer übernimmt und die andere Naht lediglich zur mechanischen Verbindung oder zur Momentabstützung zwischen Deckel und Dämpfergehäuse vorgesehen ist.

Weitere vorteilhafte Ausgestaltungen der Erfindung sind Gegenstand der Unteransprüche.

Zur besseren Verankerung des Deckels im Dämpfergehäuse kann das Dämpfergehäuse eine gestufte Deckelaufnahme aufweisen
Der Deckel kann vorzugsweise ringförmig ausgebildet sein mit einer Innenfläche in Kontakt mit dem Dämpfungsmedium und einer der Innenfläche gegenüberliegenden Außenfläche ohne Kontakt mit dem Dämpfungsmedium.

Der Deckel kann randseitig an der Innen- und Außenfläche, insbesondere zwischen diesen beiden Flächen, eine erste und zweite umlaufende Stirnfläche aufweisen, wobei die Stirnflächen mit der Deckelaufnahme jeweils mit einer Stumpfnaht verbunden sind.

Die beidseitige Anordnung von Stumpfnähten ermöglicht eine optimale Momentaufnahme und zugleich eine Abdichtfunktion des Deckels.

Die Stumpfnähte sind vorzugsweise als nicht-durchgeschweißte Schweißnähte ausgebildet. Sie erstrecken sich vorzugsweise über weniger als 80% einer Deckelhöhe des Deckels, wobei die Deckelhöhe, auf welche hier Bezug genommen wird, die Deckelhöhe im Bereich der jeweiligen Stumpfnaht ist. Dies hat den Vorteil, dass am Übergangsbereich der Stirnflächen zu den Innenflächen des Deckels eine definierte Dichtgeometrie vorliegt.

Die Überlappnaht kann sich als durchgeschweißte Schweißnaht über die gesamte Deckelhöhe des Deckels erstrecken und sich teilweise in das Dämpfergehäuse erstrecken. Vorzugsweise beträgt die Tiefe mit welcher sich die Überlappnaht in das Dämpfergehäuse erstreckt zumindest 15% der Deckelhöhe, wobei die Deckelhöhe, auf welche hier Bezug genommen wird, die Deckelhöhe im Bereich der jeweiligen Überlappnaht ist. Die Tiefe kann besonders bevorzugt 40 bis 120% der Deckelhöhe entsprechen.

Die Überlappnaht kann vorteilhaft um 2-7 mm gegenüber der Stumpfnaht in radialer Richtung versetzt angeordnet sein. Dadurch kommt es zu keinem Verschmelzen der Schweißnähte und der partielle Wärmeeintrag beim Erzeugen der Schweißnähte erfolgt an räumlich getrennten Materialbereichen. Weiterhin ergibt sich durch den Abstand der beiden Schweißnähte voneinander ein definierter Hebel, durch den die Überlappnaht mechanisch entlastet wird. Die Überlappnaht wird aufgrund der Momentenabstützung durch die Stumpstoßnaht weniger auf Biegung belastet und mehr auf Zug. Da die auftretenden Biegespannungen im Verhältnis deutlich höher sind als die auftretenden Zugspannungen wird die Naht entlastet und es kommt erst bei deutlich höherer axialer Beschleunigung des Dämpfers zum Versagen der Naht.

Der radiale Abstand der Position der Überlappnaht auf einer Auflagefläche der Deckelaufnahme des Dämpfergehäuses bis zum Übergang der Auflagefläche in die Arbeitskammer kann bevorzugt zumindest 50% der Deckelhöhe, vorzugsweise zumindest 70% der Deckelhöhe, insbesondere 75% bis 250% der Deckelhöhe betragen.

Das Dämpfergehäuse kann vorteilhaft aus Gussmetall, insbesondere aus Grauguss, ausgebildet sein. Insbesondere in Kombination mit den vorgenannten konstruktiven Merkmalen der jeweiligen Schweißnähte hat die Verwendung dieses kostengünstigen Materials den Vorteil, dass eine Materialveränderung im Grauguss durch die Schweißnahten nur lokal begrenzt ist und die Dichtigkeit des Materials kaum beeinflusst.

Ein erfindungsgemäßes Verfahren zur Herstellung eines Viskositäts-Drehschwingungsdämpfers, insbesondere eines erfindungsgemäßen Drehschwingungsdämpfers weist die folgenden Schritte auf:
a) Bereitstellen eines Dämpferkörpers umfassend einen ringförmigen Arbeitsraum zur Aufnahme eines Schwungrings über eine Kammeröffnung;
b) Einsetzen des Schwungrings in den Arbeitsraum des Dämpfungskörpers;
c) Verschluss des Arbeitsraumes des Dämpfungskörpers mit einem Deckel durch zumindest eine mediumsdichte umlaufende Schweißverbindung; und
d) Befüllen des Arbeitsraumes mit einem Dämpfungsmedium z.B. durch eine verschließbare Befüllöffnung im Deckel;

Das Verfahren zeichnet sich dabei insbesondere dadurch aus, dass die Schweißverbindung zumindest in einem randseitigen Bereich des Deckels durch eine Abfolge aus einer Stumpfnaht und einer Überlappnaht erfolgt.

Die vorgenannte Stumpfnaht und die Überlappnaht, sowie ggf. Auch alle weiteren Schweißnahten, können durch ein Laser- und/oder Elektronenstrahlschweißen erzeugt werden, welche materialschonene Verfahren mit sehr exakter Positionierung der Schweißnahten sind.

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Fig. 1: eine Perspektivansicht einer ersten Ausführungsvariante eines ringförmigen Viskositäts-Drehschwingungsdäm pfers;
- Fig. 2: eine Schnittansicht durch eine Ringhälfte des Viskositäts-Drehschwingungsdämpfers der Fig. 1;
- Fig. 3: eine Detailansicht eines ersten Verbindungsbereichs 200 zwischen einem Deckel 15 und einem Dämpfergehäuses 2 der Fig. 2;
- Fig. 4: eine Detailansicht eines zweiten Verbindungsbereichs 300 zwischen dem Deckel 15 und dem Dämpfergehäuse 2 der Fig. 2; und
- Fig. 5: eine Detailansicht einer zweiten Ausführungsvariante eines ringförmigen Viskositäts-Drehschwingungsdäm pfers.

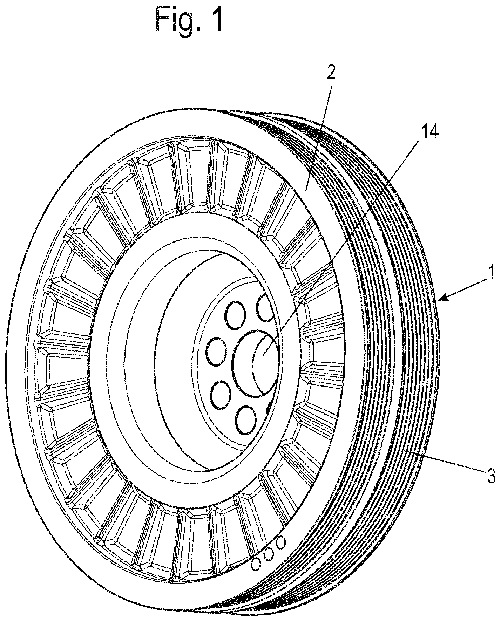

Konkret zeigt **Fig. 1** einen Viskositäts-Drehschwingungsdämpfer 1 mit einem Dämpfergehäuses 2, welches eine Mittenöffnung 14 zur Anbindung an eine Maschinenwelle.

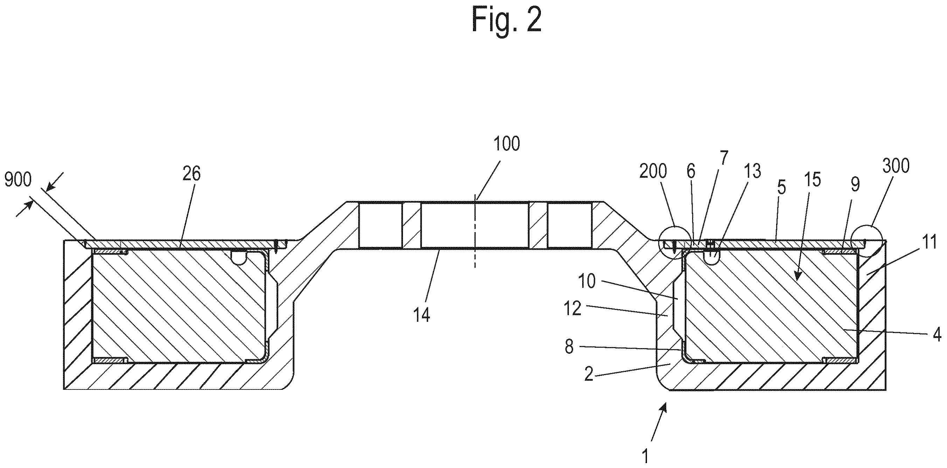

**Fig. 2** zeigt eine Rotationsachse 100 welche zentral durch die Mittenöffnung 14 verläuft und um welche der Viskositäts-Drehschwingungsdämpfer 1 drehbar angeordnet ist.

Das Dämpfergehäuse 2 des Viskositäts-Drehschwingungsdämpfers 1 weist eine erste Wandung mit einer radialen Innenmantelfläche 12 und eine, vorzugsweise parallel zur ersten Wandung verlaufende zweite Wandung mit einer radialen Außenmantelfläche 11 auf. Zwischen der Außen- und der Innenmantelfläche 11 und 12, und somit auch zwischen der dargestellten ersten und zweiten Wandung, ist eine Arbeitskammer 5 zur Anordnung eines Schwungrings 4 angeordnet. Der Schwungring 4 kann innerhalb der Arbeitskammer 5 über Lagerelemente gelagert sein und kann über eine Kammeröffnung 26 in die Arbeitskammer 5 eingelegt werden.

Zwischen der Innenmantelfläche 12 und dem Schwungring 4 ist ein Scherspalt 10 angeordnet. Nach dem Einsetzen des Schwungrings 4 in die Arbeitskammer 5, wird die Arbeitskammer 5, insbesondere die Kammeröffnung 26, mit einem Deckel 15 verschlossen und mit einem Dämpfungsmedium, z.B. Silikonöl, befüllt. Somit wird u.a. der Scherspalt 10 mit Silikonöl gefüllt. Zum Befüllen der Arbeitskammer 5 kann der Deckel 15 auf Höhe der Ausnehmung 13 eine verschließbare Einfüllöffnung aufweisen

Der Deckel 5 weist eine Deckelhöhe 900 auf und ist vorzugsweise durch Verschweißen mit dem Dämpfergehäuse 2 verbunden, wodurch die Arbeitskammer 5 mediumsdicht abgeschlossen wird. Dabei ist der Deckel 15 im Wesentlichen ringförmig aufgebaut und weist eine Außenfläche 19 auf, deren Flächennormale parallel zur Rotationsachse 100 verläuft.

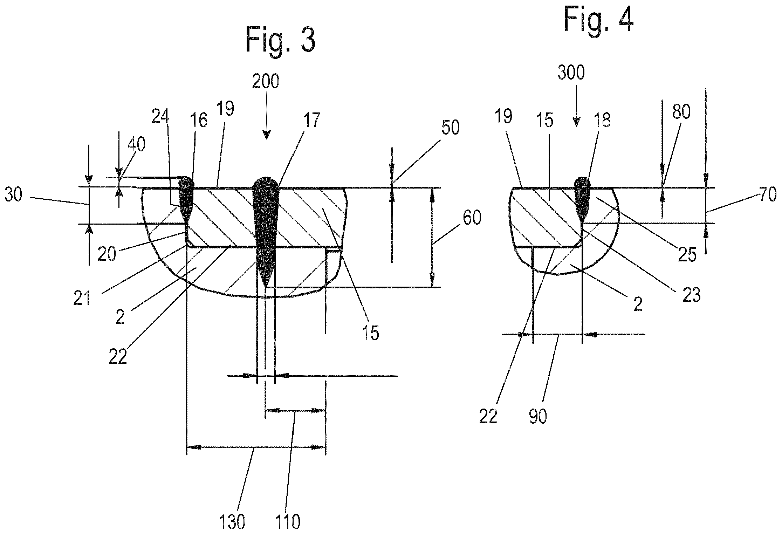

Randseitig, vorzugsweise senkrecht zu der Außenfläche 19, weist der Deckel eine innere und eine äußere Stirnfläche 20 und 23 auf, welche in einer gestuften Deckelaufnahme des Dämpfergehäuses einer Stirnfläche 24 und 25 des Dämpfergehäuses 2 gegenüberliegen. Dies ist insbesondere in **Fig. 3** dargestellt. Die Begriffe innere und äußere Stirnfläche 20 und 23 beziehen sich jeweils auf den radialen Abstand der Stirnflächen gegenüber der Rotationsachse 100.

Die innere Stirnfläche 20 des Deckels 15 und die Stirnfläche 24 der Deckelaufnahme des Dämpfergehäuses 2 definieren eine umlaufende Schnittstelle in Form eines Stupfstoßes. Entlang dieser Schnittstelle ist eine nicht-durchgeschweißte erste Schweißnaht als Stumpfnaht 16 angeordnet, sich zwischen den beiden vorgenannten Stirnflächen 20 und 24 erstreckt.

Die Stumpfnaht 16 ist in ihrer Tiefe 30 begrenzt. Der Deckel weist am Übergang zwischen der Stirnfläche 20 und einer der Außenfläche 19 gegenüberliegenden Innenfläche 22 eine Fase 21 auf. Alternativ zur Fase 21 kann auch ein Freistich im Gehäuse vorgesehen sein. Die Stumpfnaht 16 erstreckt sich zumindest nicht in den Bereich dieser Fase. Beispielsweise erstreckt sich die Stumpfnaht 16 über weniger als 80% der Deckelhöhe, vorzugsweise weniger als 65% der Deckelhöhe.

Die Deckelhöhe des vorbeschriebenen Deckels beträgt vorzugsweise weniger als 7 mm, besonders bevorzugt zwischen 2-4 mm.

Etwa um 1-7 mm gegenüber der Stumpfnaht 16 in radialer Richtung versetzt ist eine zweite Schweißnaht in Form einer sogenannten Überlappnaht 17 angeordnet. Die Überlappnaht 17 durchdringt das Material des Deckels 15 und dringt teilweise in das Material des Dämpfergehäuses 2 ein. Somit ist die Überlappnaht durchgeschweißt.

Die Überlappnaht 17 erstreckt sich ausgehend von der Innenfläche 22 des Deckels 15 mit einer Tiefe 60 von zumindest 15% der Deckelhöhe in das Dämpfergehäuse 2.

Die Deckelaufnahme weist eine erste Auflagefläche auf, auf welcher die Innenfläche 22 des Deckels 15 aufliegt. Diese Auflagefläche erstreckt sich ausgehend von der Stirnfläche 24 radial von der Rotationsachse weg in Richtung der Arbeitskammer 5. Die radiale Ersteckung 130 der Auflagefläche beträgt mehr als eine Deckelhöhe, vorzugsweise 1,5 bis 5 Deckelhöhen.

Der radiale Abstand 130 der Position der Überlappnaht 17 auf der Auflagefläche bis zum Übergang der Auflagefläche in die Arbeitskammer 5 beträgt zumindest 50% der Deckelhöhe, vorzugsweise zumindest 70% der Deckelhöhe. Die Position der Überlappnaht 17 ist dabei die Mitte der Überlappnaht im Schnitt wie auch aus Fig. 3 erkennbar ist.

**Fig. 4** zeigt die Schnittstelle zwischen der äußeren Stirnfläche 23 des Deckels 15 mit einer zweiten Stirnfläche 25 der Deckelaufnahme des Dämpfergehäuses 2. Hier wurde eine nicht-durchgeschweißte Schweißnaht in Form einer Stumpfnaht 18 vorgesehen. Dabei weist die Deckelaufnahme eine zweite Auflagefläche auf, welche ausgehend von der zweiten Stirnfläche 25 bis zum Übergang zur Kammer 5 eine radiale Erstreckung 90 aufweist. Diese beträgt zumindest 25% der Deckelhöhe, vorzugsweise zumindest 50% der Deckelhöhe.

Die in Fig. 4 dargestellte Anordnung aus Deckel und Dämpfergehäuse ist nur beispielhat, so kann der Deckel z.B. auch auf in aufgesetzter Weise auf dem Dämpfergehäuse aufgelegt sein und mit mit einer Überlappnaht ausgeführt sein.

Alternativ kann auch eine Schweißnaht-Konfiguration aus Stumofnaht und Überlappnaht wie in Fig. 3 gewählt werden.

Die Abfolge aus der Stumpfnaht 16 und der Überlappnaht 17 zur randseitigen Fixierung des Deckels 15 in einer Deckelaufnahme des Dämpfergehäuses 2 ermöglicht eine Fixierung des Deckels und zugleich eine Momentabstützung der Überlappschweißnaht bei Druckbelastung des Deckels 15 und/oder bei Axialschwingungen auf den Viskositäts-Drehschwingungsdämpfer 1. Diese Axialschwingungen werden typischerweise von einem Front-End der Kurbelwelle auf das Dämpfergehäuse übertragen. Aufgrund der Trägheit des Schwungrings drückt dieser beim Beschleunigen des Gehäuses auf den Deckel und belastet so die Schweißnaht. Die Stumpfnaht 16 und die Überlappnaht 17 dient dabei zum einseitigen umlaufenden Verschluss des Deckels 15 auf dem inneren Durchmesser der Kammer. Auf der zweiten Seite des Deckels, also entlang der zweiten Stirnfläche 23 kann z.B. nur eine Stumpfnaht 18 oder eine Überlappnaht angeordnet sein,

Selbstverständlich können auch entlang der zweiten Stirnfläche sowohl eine Überlappnaht als auch eine Stumpfnaht angeordnet sein. Ist dies der Fall, so kann die Überlappnaht 17 ggf. eingespart werden.

Die Dauerwechselfestigkeit der insbesondere in Fig. 3 ausgeführten Schweißnähte des Viskositäts-Drehschwingungsdämpfers 1 sind bei dieser Schweißnahtanordnung signifikant höher, da die Überlappnaht mehr auf Zug und weniger auf Biegung belastet wird

Die vorgenannten Schweißnähte 16-18 können bevorzugt durch Laser- oder Elektronenstrahlschweißen realisiert werden. Dadurch können vergleichsweise kleine und zugleich exakt-positionierte Schweißnähte erzeugt werden.

Das Dämpfergehäuse 2 kann typischerweise aus einem Gussmetall, insbesondere aus einem Grauguss gefertigt sein. Der Deckel kann aus einem beliebigen Metall, vorzugsweise jedoch aus Edelstahl, insbesondere in Kombination mit dem Grauguss-Dämpfergehäuse, gefertigt sein.

Materialeigenschaften von Grauguss können sich bei längerem Schweißen unerwünscht verändern. Daher ist insbesondere auch bei der Tiefe und Breite der Schweißnähte 16-18 ein Kompromiss aus optimaler Anbindung, Abstützung und zugleich einer materialschonenden Herstellung zu finden, welcher mit den jeweiligen vorgenannten Bereichsangaben erzielt wurde.

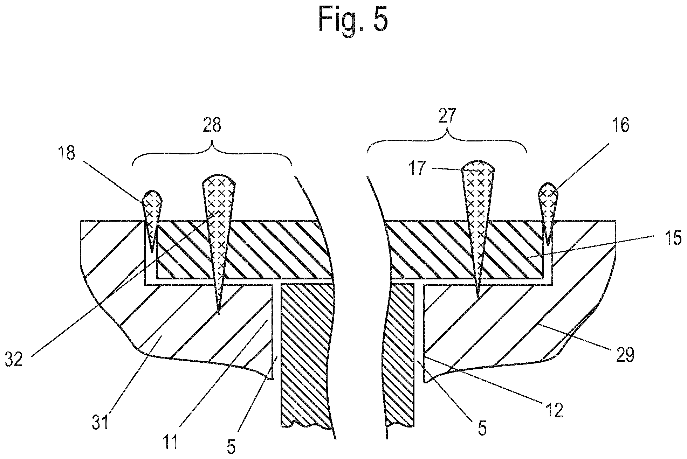

Fig. 5 zeigt eine Detaildarstellung einer zweiten Ausführungsvariante, in welcher auf der rechten Darstellung (analog zu Fig. 1-4) ein radial innerer Randbereich des Deckels 15 mit einer innenliegenden ersten Stirnseite des Deckels 15 über eine Stupfnaht 16 umlaufend mit einer Stirnseite mit einer ersten die Arbeitskammer 5 begrenzenden ersten Wandung 29 des Dämpfergehäuses 2 verschweißt ist. Die Wandung ist zusätzlich mit einer durchgeschweißten Überlappnaht 17 mit der ersten Wandung 29 verbunden.

Fig.5 zeigt auf der linken Darstellung eine analoge Abfolge einer Überlappnaht 17 und einer Stumpfnaht 18 zur Verbindung der außenliegenden zweiten Stirnseite des Deckels 15 mit einer zweiten Wandung 31 des Dämpfergehäuses 2. Die Wandungen 29 und 31 begrenzen die Arbeitskammer 5, liegen einander gegenüber und können besonders bevorzugt koaxial zueinander verlaufen. Die erste Stirnseite des Deckels 15 weist einen kleineren Durchmesser auf als die zweite Stirnseite des Deckels 15.

Mit anderen Worten weist der Viskositäts-Drehschwingungsdämpfer der Fig. 5 eine erste Wandung 29 mit einer Innenmantelfläche 12 und eine zweite Wandung 31 mit einer Außenmantelfläche 11 auf, wobei die Arbeitskammer 5 zwischen den beiden vorgenannten Flächen 11 und 12 und somit auch zwischen den beiden Wänden 29 und 31 angeordnet ist, wobei in einem radial äußeren Randbereich 28 des Deckels 15 die Abfolge aus Überlappnaht 32 und Stumpfnaht 18 angeordnet ist, wobei beide Schweißnähte 18 und 32 den Deckel 15 mit der ersten Wandung 31 umfassend die Außenmantelfläche 11 verbinden.

Weiterhin weist der Viskositäts-Drehschwingungsdämpfer der Fig. 5 eine erste Wandung 29 mit einer Innenmantelfläche 12 und eine zweite Wandung 31 mit einer Außenmantelfläche 11 auf, wobei die Arbeitskammer 5 zwischen den beiden vorgenannten Flächen 11 und 12 und somit auch zwischen den beiden Wänden 29 und 31 angeordnet ist, wobei in einem radial inneren Randbereich 27 des Deckels 15 die Abfolge aus Überlappnaht 17 und Stumpfnaht 16 angeordnet ist, wobei beide Schweißnähte 16 und 17 den Deckel 15 mit der ersten Wandung 29 umfassend die Innenmantelfläche 11 verbinden.

Endsprechend existieren in jedem Randbereich in welchem die beiden Stirnseiten des Deckels mit jeweils einer der beiden vorgenannten Wandungen über eine Doppelnaht verschweißt und damit materialschlüssig verbunden sind, jeweils eine Abfolge aus Stumpfnaht und Überlappnaht. Der Deckel ist somit in dieser Ausführungsvariante beidseitig, also entlang beider Stirnseiten mit dem Dämpfergehäuse durch die Abfolge aus Stumpfnaht und Überlappnaht verbunden.

Wie schon aus Fig. 1 und 2 erkennbar, weisen die in Fig. 1 und 2 unbeschrifteten Wandungen 29 und 31 die Außenmantelfläche 11 und die Innenmantelfläche 12 auf. Daher ist die Zuordnung der Wandungen auch im Ausführungsbeispiel der Fig. 1-4 offensichtlich

### Bezugszeichen

- 1: Viskositäts-Drehschwingungsdämpfer
- 2: Dämpfergehäuses

- 4: Schwungring
- 5: Arbeitskammer
- 11: Außenmantelfläche
- 12: Innenmantelfläche
- 14: Mittenöffnung
- 15: Deckel
- 16: Stumpfnaht
- 17: Überlappnaht
- 18: Stumpfnaht
- 19: Außenfläche
- 20: Stirnfläche
- 21: Fase
- 22: Innenfläche
- 23: Stirnfläche
- 24: Stirnfläche
- 25: Stirnfläche
- 26: Kammeröffnung
- 27: Radial innerer Randbereich
- 28: Radial äußerer Randbereich
- 29: Erste Wandung
- 31: Zweite Wandung
- 32: Überlappnaht

- 30: Tiefe
- 60: Tiefe
- 70: Tiefe
- 90: radiale Erstreckung
- 110: radialer Abstand
- 130: radiale Erstreckung

- 100: Rotationsachse
- 900: Deckelhöhe

## Patentansprüche

1. Viskositäts-Drehschwingungsdämpfer (1) umfassend
ein Dämpfergehäuse (2) mit einer Rotationsachse (100), einer ringförmigen mit
einem Dämpfungsmedium befüllten Arbeitskammer (5);
ein innerhalb der Arbeitskammer (5) angeordneter Schwungring (4) und
einen Deckel (15) zum mediumsdichten Verschluss der Arbeitskammer (5)
wobei der Deckel (15) zumindest einseitig umlaufend durch eine Abfolge aus einer Stumpfnaht (16, 18) und einer Überlappnaht (17, 32) mit dem Dämpfergehäuse (2) verbunden ist, **dadurch gekennzeichnet, dass**
die Überlappnaht (17, 32) um 1-7 mm gegenüber der Stumpfnaht (16, 18) in radialer Richtung versetzt angeordnet ist, wobei der Viskositäts-Drehschwingungsdämpfer (1) eine erste Wandung (29) mit einer Innenmantelfläche (12) und eine zweite Wandung (31) mit einer Außenmantelfläche (11) aufweist, wobei die Arbeitskammer (5) zwischen den beiden vorgenannten Flächen (11 und 12) und somit auch zwischen den beiden Wänden (29 und 31) angeordnet ist, wobei in einem radial äußeren Randbereich (28) des Deckels (15) die Abfolge aus Überlappnaht (32) und Stumpfnaht (18) angeordnet ist, wobei beide Schweißnähte (18 und 32) den Deckel (15) mit der zweiten Wandung (31) umfassend die Außenmantelfläche (11) verbinden.

2. Viskositäts-Drehschwingungsdämpfer (1) umfassend
ein Dämpfergehäuse (2) mit einer Rotationsachse (100), einer ringförmigen mit
einem Dämpfungsmedium befüllten Arbeitskammer (5);
ein innerhalb der Arbeitskammer (5) angeordneter Schwungring (4) und
einen Deckel (15) zum mediumsdichten Verschluss der Arbeitskammer (5)
wobei der Deckel (15) zumindest einseitig umlaufend durch eine Abfolge aus einer Stumpfnaht (16, 18) und einer Überlappnaht (17, 32) mit dem Dämpfergehäuse (2) verbunden ist, **dadurch gekennzeichnet, dass**
die Überlappnaht (17, 32) um 1-7 mm gegenüber der Stumpfnaht (16, 18) in radialer Richtung versetzt angeordnet ist, wobei der Viskositäts-Drehschwingungsdämpfer (1) eine erste Wandung (29) mit einer Innenmantelfläche (12) und eine zweite Wandung (31) mit einer Außenmantelfläche (11) aufweist, wobei die Arbeitskammer (5) zwischen den beiden vorgenannten Flächen (11 und 12) und somit auch zwischen den beiden Wänden (29 und 31) angeordnet ist, wobei in einem radial inneren Randbereich (27) des Deckels (15) die Abfolge aus Überlappnaht (17) und
Stumpfnaht (16) angeordnet ist, wobei beide Schweißnähte (16 und 17) den Deckel (15) mit der ersten Wandung (29) umfassend die Innenmantelfläche (12) verbinden.

3. Viskositäts-Drehschwingungsdämpfer nach Anspruch 1 und 2, wobei der Deckel (15) als Ringplatte ausgebildet ist mit dem radial äußeren und dem radial inneren Randbereich (27, 28) und dass der Deckel (15) in dem äußeren Randbereich (28) und in dem inneren Randbereich (27), also beidseitig, umlaufend jeweils durch eine Abfolge aus einer Stumpfnaht (16, 18) und einer Überlappnaht (17, 32) mit dem Dämpfergehäuse (2) verbunden ist.

4. Viskositäts-Drehschwingungsdämpfer nach einem der vorhergehenden Ansprüche, wobei das Dämpfergehäuse (2) eine gestufte Deckelaufnahme aufweist, wobei der Deckel (15) ringförmig ausgebildet ist mit einer Innenfläche (22) in Kontakt mit dem Dämpfungsmedium und einer gegenüberliegenden Außenfläche (19) ohne Kontakt mit dem Dämpfungsmedium, wobei der Deckel (15) randseitig an der Innen- und Außenfläche (19, 22) eine erste und zweite umlaufende Stirnfläche (20, 23) aufweist, wobei die Stirnflächen (20, 23) mit der Deckelaufnahme jeweils mit einer Stumpfnaht (16, 18) verbunden sind.

5. Viskositäts-Drehschwingungsdämpfer nach einem der vorhergehenden Ansprüche, wobei das Dämpfergehäuse aufgesetzt mit dem Deckel verbunden ist, wobei der Deckel ringförmig ausgebildet ist mit einer Innenfläche in Kontakt mit dem Dämpfungsmedium und einer gegenüberliegenden Außenfläche ohne Kontakt mit dem Dämpfungsmedium, wobei der Deckel in den randseitigen Bereichen der Innen- und Außenfläche mit dem Dämpfergehäuse jeweils mittels einer Überlappnaht verschweißt ist.

6. Viskositäts-Drehschwingungsdämpfer nach einem der vorhergehenden Ansprüche, wobei die Stumpfnähte (16, 18) als nicht-durchgeschweißte Schweißnähte, vorzugsweise um weniger als 80% einer Deckelhöhe (900) des Deckels (15) ausgebildet sind.

7. Viskositäts-Drehschwingungsdämpfer nach einem der vorhergehenden Ansprüche, wobei die Überlappnaht (17, 32) sich als durchgeschweißte Schweißnaht über die gesamte Deckelhöhe des Deckels (15) erstreckt und teilweise in das Dämpfergehäuse (2), vorzugsweise mit einer Tiefe (60) von zumindest 30% der Deckelhöhe (900) in das Dämpfergehäuse (2), erstreckt.

8. Viskositäts-Drehschwingungsdämpfer nach einem der vorhergehenden Ansprüche, wobei der radiale Abstand (130) der Position der Überlappnaht (17) auf einer Auflagefläche der Deckelaufnahme des Dämpfergehäuses (2) bis zum Übergang der Auflagefläche in die Arbeitskammer (5) zumindest 50% der Deckelhöhe (900), vorzugsweise zumindest 70% der Deckelhöhe (900), insbesondere 75% bis 250% der Deckelhöhe (900) beträgt.

9. Viskositäts-Drehschwingungsdämpfer nach einem der vorhergehenden Ansprüche, wobei das Dämpfergehäuse (2) aus Gussmetall, insbesondere aus Grauguss ausgebildet ist.

10. Verfahren zur Herstellung eines Viskositäts-Drehschwingungsdämpfers (1) nach einem der vorhergehenden Ansprüche, mit den folgenden Schritten:
a) Bereitstellen eines Dämpferkörpers (2) umfassend einen ringförmigen Arbeitsraum (5) zur Aufnahme eines Schwungrings (4) über eine Kammeröffnung (26).
b) Einsetzen des Schwungrings (4) in den Arbeitsraum (5) des Dämpfungskörpers;
c) Verschluss des Arbeitsraumes (5) des Dämpfungskörpers (2) mit einem Deckel (15) durch zumindest eine mediumsdichte umlaufende Schweißverbindung; und
d) Befüllen des Arbeitsraumes (5) mit einem Dämpfungsmedium;
**dadurch gekennzeichnet, dass** die Schweißverbindung zumindest in einem randseitigen Bereich des Deckels (15) durch eine Abfolge aus einer Stumpfnaht (16) und einer Überlappnaht (17) erfolgt, wobei die Überlappnaht (17, 32) um 1-7 mm gegenüber der Stumpfnaht (16, 18) in radialer Richtung versetzt angeordnet ist, wobei der Viskositäts-Drehschwingungsdämpfer (1) eine erste Wandung (29) mit einer Innenmantelfläche (12) und eine zweite Wandung (31) mit einer Außenmantelfläche (11) aufweist, wobei die Arbeitskammer (5) zwischen den beiden vorgenannten Flächen (11 und 12) und somit auch zwischen den beiden Wänden (29 und 31) angeordnet ist, wobei in einem radial äußeren Randbereich (28) des Deckels (15) die Abfolge aus Überlappnaht (32) und Stumpfnaht (18) angeordnet ist, wobei beide Schweißnähte (18 und 32) den Deckel (15) mit der ersten Wandung (31) umfassend die Außenmantelfläche (11) verbinden
oder
wobei der Viskositäts-Drehschwingungsdämpfer (1) eine erste Wandung (29) mit einer Innenmantelfläche (12) und eine zweite Wandung (31) mit einer Außenmantelfläche (11) aufweist, wobei die Arbeitskammer (5) zwischen den beiden vorgenannten Flächen (11 und 12) und somit auch zwischen den beiden Wänden (29 und 31) angeordnet ist, wobei in einem radial inneren Randbereich (27) des Deckels (15) die Abfolge aus Überlappnaht (17) und Stumpfnaht (16) angeordnet ist, wobei beide Schweißnähte (16 und 17) den Deckel (15) mit der ersten Wandung (29) umfassend die Innenmantelfläche (11) verbinden.

11. Verfahren nach Anspruch 10,
**dadurch gekennzeichnet, dass** die Stumpfnaht (16, 18) und die Überlappnaht (17, 32) durch Laser- und/oder Elektronenstrahlschweißen erzeugt wird.

## Claims

1. Viscous torsional-vibration damper (1) comprising
a damper housing (2) having an axis of rotation (100), an annular working chamber (5) filled with a damping medium;
an inertia ring (4) arranged inside the working chamber (5) and a cover (15) for medium-tight closure of the working chamber (5), wherein the cover (15) is connected to the damper housing (2) circumferentially at least on one side by a sequence of a butt seam (16, 18) and a lap seam (17, 32), **characterised in that** the lap seam (17, 32) is arranged offset in the radial direction by 1-7 mm relative to the butt seam (16, 18), wherein the viscous torsional-vibration damper (1) has a first wall (29) with an inner lateral surface (12) and a second wall (31) with an outer lateral surface (11), wherein the working chamber (5) is arranged between the two aforementioned surfaces (11 and 12) and thus also between the two walls (29 and 31), wherein the sequence of lap seam (32) and butt seam (18) is arranged in a radially outer edge region (28) of the cover (15), wherein both weld seams (18 and 32) connect the cover (15) to the second wall (31) comprising the outer lateral surface (11).

2. Viscous torsional-vibration damper (1) comprising
a damper housing (2) having an axis of rotation (100), an annular working chamber (5) filled with a damping medium;
an inertia ring (4) arranged inside the working chamber (5) and a cover (15) for medium-tight closure of the working chamber (5), wherein the cover (15) is connected to the damper housing (2) circumferentially at least on one side by a sequence of a butt seam (16, 18) and a lap seam (17, 32), **characterised in that** the lap seam (17, 32) is arranged offset in the radial direction by 1-7 mm relative to the butt seam (16, 18), wherein the viscous torsional-vibration damper (1) has a first wall (29) with an inner lateral surface (12) and a second wall (31) with an outer lateral surface (11), wherein the working chamber (5) is arranged between the two aforementioned surfaces (11 and 12) and thus also between the two walls (29 and 31), wherein the sequence of lap seam (17) and butt seam (16) is arranged in a radially inner edge region (27) of the cover (15), wherein both weld seams (16 and 17) connect the cover (15) to the first wall (29) comprising the inner lateral surface (12).

3. Viscous torsional-vibration damper according to claim 1 and 2,
wherein the cover (15) is designed as an annular plate with the radially outer and the radially inner edge region (27, 28), and in that the cover (15) is connected circumferentially to the damper housing (2) in the outer edge region (28) and in the inner edge region (27), that is to say on both sides, in each case by a sequence of a butt seam (16, 18) and a lap seam (17, 32).

4. Viscous torsional-vibration damper according to any of the preceding claims, wherein the damper housing (2) has a stepped cover receptacle, wherein the cover (15) is of annular design with an inner surface (22) in contact with the damping medium and an opposite outer surface (19) without contact with the damping medium, wherein the cover (15) has a first and second circumferential end surface (20, 23) on the edges of the inner and outer surface (19, 22), wherein the end surfaces (20, 23) are connected to the cover receptacle in each case by a butt seam (16, 18).

5. Viscous torsional-vibration damper according to any of the preceding claims, wherein the damper housing is connected to the cover mounted on top, wherein the cover is of annular design with an inner surface in contact with the damping medium and an opposite outer surface without contact with the damping medium, wherein the cover is welded to the damper housing in the edge regions of the inner and outer surfaces in each case by means of a lap seam.

6. Viscous torsional-vibration damper according to any of the preceding claims, wherein the butt seams (16, 18) are designed as non-welded-through weld seams, preferably forming less than 80% of a cover height (900) of the cover (15).

7. Viscous torsional-vibration damper according to any of the preceding claims, wherein the lap seam (17, 32) extends as a welded-through weld seam over the entire cover height of the cover (15) and extends partially into the damper housing (2), preferably with a depth (60) of at least 30% of the cover height (900) into the damper housing (2).

8. Viscous torsional-vibration damper according to any of the preceding claims, wherein the radial distance (130) between the position of the lap seam (17) on a supporting surface of the cover receptacle of the damper housing (2) and the transition of the supporting surface to the working chamber (5) amounts to at least 50% of the cover height (900), preferably at least 70% of the cover height (900), in particular 75% to 250% of the cover height (900).

9. Viscous torsional-vibration damper according to any of the preceding claims, wherein the damper housing (2) is made of cast metal, in particular grey cast iron.

10. Method for producing a viscous torsional-vibration damper (1) according to any of the preceding claims, having the following steps:
a) providing a damper body (2) comprising an annular working space (5) for receiving an inertia ring (4) via a chamber opening (26);
b) inserting the inertia ring (4) into the working space (5) of the damping body;
c) closing the working space (5) of the damping body (2) with a cover (15) by means of at least one medium-tight circumferential welded joint; and
d) filling the working space (5) with a damping medium;
**characterised in that** the welded joint is effected at least in an edge region of the cover (15) by a sequence of a butt seam (16) and a lap seam (17), wherein the lap seam (17, 32) is arranged offset in the radial direction by 1-7 mm relative to the butt seam (16, 18), wherein the viscous torsional-vibration damper (1) has a first wall (29) with an inner lateral surface (12) and a second wall (31) with an outer lateral surface (11), wherein the working chamber (5) is arranged between the two aforementioned surfaces (11 and 12) and thus also between the two walls (29 and 31), wherein the sequence of lap seam (32) and butt seam (18) is arranged in a radially outer edge region (28) of the cover (15), wherein both weld seams (18 and 32) connect the cover (15) to the first wall (31) comprising the outer lateral surface (11),
or
wherein the viscous torsional-vibration damper (1) has a first wall (29) with an inner lateral surface (12) and a second wall (31) with an outer lateral surface (11), wherein the working chamber (5) is arranged between the two aforementioned surfaces (11 and 12) and thus also between the two walls (29 and 31), wherein the sequence of lap seam (17) and butt seam (16) is arranged in a radially inner edge region (27) of the cover (15), wherein both weld seams (16 and 17) connect the cover (15) to the first wall (29) comprising the inner lateral surface (12).

11. Method according to claim 10,
**characterised in that** the butt seam (16, 18) and the lap seam (17, 32) are produced by laser and/or electron beam welding.

## Revendications

1. Amortisseur de vibrations torsionnelles à viscosité (1) comprenant
un boîtier d'amortisseur (2) avec un axe de rotation (100), une chambre de travail (5) annulaire remplie d'un milieu d'amortissement ;
une bague d'inertie (4) agencée à l'intérieur de la chambre de travail (5) et un couvercle (15) pour la fermeture étanche au milieu de la chambre de travail (5), dans lequel le couvercle (15) est relié au boîtier d'amortisseur (2) au moins d'un côté circonférentiellement par une séquence d'une soudure bout à bout (16, 18) et d'une soudure par recouvrement (17, 32), **caractérisé en ce que** la soudure par recouvrement (17, 32) est agencée en déport dans le sens radial de 1 à 7 mm par rapport à la soudure bout à bout (16, 18), dans lequel l'amortisseur de vibrations torsionnelles à viscosité (1) présente une première paroi (29) avec une surface d'enveloppe intérieure (12) et une seconde paroi (31) avec une surface d'enveloppe extérieure (11), dans lequel la chambre de travail (5) est agencée entre les deux surfaces précitées (11 et 12) et ainsi aussi entre les deux parois (29 et 31), dans lequel la séquence de la soudure par recouvrement (32) et de la soudure bout à bout (18) est agencée dans une zone de bord (28) radialement extérieure du couvercle (15), dans lequel les deux cordons de soudure (18 et 32) relient le couvercle (15) à la seconde paroi (31) comprenant la surface d'enveloppe extérieure (11).

2. Amortisseur de vibrations torsionnelles à viscosité (1) comprenant
un boîtier d'amortisseur (2) avec un axe de rotation (100), une chambre de travail (5) annulaire remplie d'un milieu d'amortissement ;
une bague d'inertie (4) agencée à l'intérieur de la chambre de travail (5) et un couvercle (15) pour la fermeture étanche au milieu de la chambre de travail (5), dans lequel le couvercle (15) est relié au boîtier d'amortisseur (2) au moins d'un côté circonférentiellement par une séquence d'une soudure bout à bout (16, 18) et d'une soudure par recouvrement (17, 32), **caractérisé en ce que** la soudure par recouvrement (17, 32) est agencée en déport dans le sens radial de 1 à 7 mm par rapport à la soudure bout à bout (16, 18), dans lequel l'amortisseur de vibrations torsionnelles à viscosité (1) présente une première paroi (29) avec une surface d'enveloppe intérieure (12) et une seconde paroi (31) avec une surface d'enveloppe extérieure (11), dans lequel la chambre de travail (5) est agencée entre les deux surfaces précitées (11 et 12) et ainsi aussi entre les deux parois (29 et 31), dans lequel la séquence de la soudure par recouvrement (17) et de la soudure bout à bout (16) est agencée dans une zone de bord (27) radialement intérieure du couvercle (15), dans lequel les deux cordons de soudure (16 et 17) relient le couvercle (15) à la première paroi (29) comprenant la surface d'enveloppe intérieure (12).

3. Amortisseur de vibrations torsionnelles à viscosité selon les revendications 1 et 2,
dans lequel le couvercle (15) est réalisé comme plaque annulaire avec la zone de bord (27, 28) radialement extérieure et radialement intérieure et en ce que le couvercle (15) est relié au boîtier d'amortisseur (2) dans la zone de bord (28) extérieure et dans la zone de bord (27) intérieure, donc des deux côtés, de manière circonférentielle respectivement par une séquence d'une soudure bout à bout (16, 18) et d'une soudure par recouvrement (17, 32).

4. Amortisseur de vibrations torsionnelles à viscosité selon l'une quelconque des revendications précédentes,
dans lequel le boîtier d'amortisseur (2) présente un logement de couvercle étagé, dans lequel le couvercle (15) est réalisé en forme d'anneau avec une surface intérieure (22) en contact avec le milieu d'amortissement et une surface extérieure (19) opposée sans contact avec le milieu d'amortissement, dans lequel le couvercle (15) présente côté bord au niveau des surfaces intérieure et extérieure (19, 22) une première et seconde surface frontale (20, 23) circonférentielle, dans lequel les surfaces frontales (20, 23) sont reliées au logement de couvercle respectivement avec une soudure bout à bout (16, 18).

5. Amortisseur de vibrations torsionnelles à viscosité selon l'une quelconque des revendications précédentes,
dans lequel le boîtier d'amortisseur est relié au couvercle en étant mis en place, dans lequel le couvercle est réalisé en forme d'anneau avec une surface intérieure en contact avec le milieu d'amortissement et une surface extérieure opposée sans contact avec le milieu d'amortissement, dans lequel le couvercle est soudé au boîtier d'amortisseur dans les zones côté bord des surfaces intérieure et extérieure respectivement au moyen d'une soudure par recouvrement.

6. Amortisseur de vibrations torsionnelles à viscosité selon l'une quelconque des revendications précédentes,
dans lequel les soudures bout à bout (16, 18) sont réalisées comme cordons de soudure non soudés, de préférence formant moins de 80 % d'une hauteur de couvercle (900) du couvercle (15).

7. Amortisseur de vibrations torsionnelles à viscosité selon l'une quelconque des revendications précédentes,
dans lequel la soudure par recouvrement (17, 32) s'étend comme cordon de soudure soudé sur la hauteur entière de couvercle du couvercle (15) et s'étend partiellement dans le boîtier d'amortisseur (2), de préférence avec une profondeur (60) d'au moins 30 % de la hauteur de couvercle (900) dans le boîtier d'amortisseur (2).

8. Amortisseur de vibrations torsionnelles à viscosité selon l'une quelconque des revendications précédentes,
dans lequel la distance radiale (130) de la position de la soudure par recouvrement (17) sur une surface d'appui du logement de couvercle du boîtier de couvercle (2) jusqu'à la transition de la surface d'appui dans la chambre de travail (5) s'élève au moins à 50 % de la hauteur de couvercle (900), de préférence au moins à 70 % de la hauteur de couvercle (900), en particulier entre 75 % et 250 % de la hauteur de couvercle (900).

9. Amortisseur de vibrations torsionnelles à viscosité selon l'une quelconque des revendications précédentes,
dans lequel le boîtier d'amortisseur (2) est réalisé en métal coulé, en particulier en fonte grise.

10. Procédé de fabrication d'un amortisseur de vibrations torsionnelles à viscosité (1) selon l'une quelconque des revendications précédentes, avec les étapes suivantes :
a) fourniture d'un corps d'amortisseur (2) comprenant un espace de travail (5) annulaire pour la réception d'une bague d'inertie (4) par le biais d'une ouverture de chambre (26).
b) insertion de la bague d'inertie (4) dans l'espace de travail (5) du corps d'amortissement ;
c) fermeture de l'espace de travail (5) du corps d'amortissement (2) avec un couvercle (15) par au moins une liaison soudée circonférentielle étanche au milieu ; et
d) remplissage de l'espace de travail (5) avec un milieu d'amortissement ;
**caractérisé en ce que** la liaison soudée est effectuée au moins dans une zone côté bord du couvercle (15) par une séquence d'une soudure bout à bout (16) et d'une soudure par recouvrement (17), dans lequel la soudure par recouvrement (17, 32) est agencée en déport dans le sens radial de 1 à 7 mm par rapport à la soudure bout à bout (16, 18), dans lequel l'amortisseur de vibrations torsionnelles à viscosité (1) présente une première paroi (29) avec une surface d'enveloppe intérieure (12) et une seconde paroi (31) avec une surface d'enveloppe extérieure (11), dans lequel la chambre de travail (5) est agencée entre les deux surfaces précitées (11 et 12) et ainsi aussi entre les deux parois (29 et 31), dans lequel la séquence de la soudure par recouvrement (32) et de la soudure bout à bout (18) est agencée dans une zone de bord (28) radialement extérieure du couvercle (15), dans lequel les deux cordons de soudure (18 et 32) relient le couvercle (15) à la première paroi (31) comprenant la surface d'enveloppe extérieure (11) ou
dans lequel l'amortisseur de vibrations torsionnelles à viscosité (1) présente une première paroi (29) avec une surface d'enveloppe intérieure (12) et une seconde paroi (31) avec une surface d'enveloppe extérieure (11), dans lequel la chambre de travail (5) est agencée entre les deux surfaces précitées (11 et 12) et ainsi aussi entre les deux parois (29 et 31), dans lequel la séquence de la soudure par recouvrement (17) et de la soudure bout à bout (16) est agencée dans une zone de bord (27) radialement intérieure du couvercle (15), dans lequel les deux cordons de soudure (16 et 17) relient le couvercle (15) à la première paroi (29) comprenant la surface d'enveloppe intérieure (11).

11. Procédé selon la revendication 10,
**caractérisé en ce que** la soudure bout à bout (16, 18) et la soudure par recouvrement (17, 32) sont générées par soudage au laser et/ou au faisceau électronique.
